# FASCICULE DE BREVET EUROPEEN

(11) **EP 0 869 279 B1**
(45) Date de publication et mention de la délivrance du brevet: **04.06.2003**
(21) Numéro de dépôt: 98400705.4
(22) Date de dépôt: 26.03.1998
(51) Int. Cl.: F03C 1/04, F16D 55/36, F16D 59/02

(54) **Frein à ressort avec dispositif de défreinage mécanique**
Federkraftbremse mit mechanischer Bremslösevorrichtung
Spring-loaded brake with mecanical brake release device

(30) Priorité: 27.03.1997 FR 9703746
(43) Date de publication de la demande: 07.10.1998
(73) Titulaire: POCLAIN HYDRAULICS INDUSTRIE, 60411 Verberie (FR)
(72) Inventeur: Lallier, Jean-Claude, 60800 - Crepy-en-Valois (FR)
(74) Mandataire: Intès, Didier Gérard André

(56) Documents cités:
- FR-A- 2 655 091
- FR-A- 2 695 695
- US-A- 4 245 724

## Description

La présente invention concerne un dispositif de freinage et un moteur hydraulique équipé d'un tel dispositif.

Le dispositif de freinage comprend :
un carter de frein à l'intérieur duquel est disposé un organe interne, ledit carter et ledit organe interne étant susceptibles de tourner l'un par rapport à l'autre autour d'un axe de rotation,
des premiers moyens de freinage solidaires en rotation du carter de frein,
des deuxièmes moyens de freinage solidaires en rotation de l'organe interne,
un piston de freinage présentant une première face, tournée vers l'intérieur du carter et ayant une zone d'appui s'étendant sensiblement transversalement par rapport à l'axe de rotation,
des moyens élastiques pour déplacer axialement le piston de freinage dans un premier sens, vers une position de freinage dans laquelle la zone d'appui sollicite axialement les premiers et deuxièmes moyens de freinage en contact de freinage,
des moyens hydrauliques pour déplacer axialement ledit piston de freinage dans un deuxième sens, vers une position de défreinage dans laquelle le contact de freinage est supprimé, et
des moyens de défreinage mécanique pour amener et maintenir le piston de freinage dans la position de défreinage, lesdits moyens comprenant une vis coopérant avec un taraudage,
les premiers et deuxièmes moyens de freinage, ainsi que la zone d'appui du piston de freinage ayant globalement une symétrie de révolution par rapport à l'axe de rotation.

Le brevet FR-A-2 655 091 montre un moteur hydraulique dont le piston de freinage comporte, sur sa face externe, un taraudage axial aligné sur l'axe de rotation du moteur. Pour assurer le défreinage mécanique, une vis, passant à travers un perçage central du couvercle du moteur situé du côté extérieur du piston de frein, peut être vissée dans ce taraudage alors que sa tête est en butée, directement ou indirectement, contre le couvercle, pour déplacer le piston de freinage dans le deuxième sens et le maintenir dans en position de défreinage. Ce système est efficace pour autant qu'il soit possible d'accéder à la tête de la vis, ce qui nécessite un espace suffisant du côté de l'extrémité axiale du moteur adjacente au couvercle. Ceci n'est pas toujours le cas, le moteur pouvant être disposé dans un espace de dimension réduite ou, par exemple, être intégré axialement dans la transmission d'un véhicule.

La présente invention vise à proposer des moyens de défreinage mécanique susceptibles d'être mis en oeuvre facilement et efficacement à partir d'une face axiale du moteur et non à partir de l'extrémité axiale de ce dernier.

Ce but est atteint grâce au fait que les moyens de défreinage mécanique comprennent au moins deux systèmes de défreinage comportant, chacun :
un perçage, réalisé dans le carter et présentant une première extrémité ouverte située dans une face externe du carter sensiblement axiale et une deuxième extrémité ouverte située en regard de la première face du piston de freinage, le perçage s'étendant sensiblement radialement par rapport à l'axe de rotation à partir de sa première extrémité, au moins sur un premier tronçon qui est taraudé dans une région voisine de la première extrémité du perçage, ce dernier présentant une paroi de fond, située au voisinage de sa deuxième extrémité et fermant au moins partiellement ledit perçage du côté de l'axe de rotation,
une vis, disposée dans ladite région taraudée et susceptible, par vissage dans ledit premier tronçon, d'être déplacée sensiblement radialement par rapport à l'axe de rotation, et
des moyens de transfert du déplacement aptes, lors du vissage de la vis, à solliciter le piston vers sa deuxième position, ces moyens de transfert comprenant au moins un organe intermédiaire apte, sous l'effet du vissage de la vis, à rouler sur ladite paroi de fond du perçage pour se déplacer sensiblement axialement vers la première face du piston de freinage.

Lorsque la vis est disposée dans le perçage (dans son premier tronçon), sa tête dépasse sensiblement radialement au-delà d'une face axiale du carter du moteur. Pour assurer le défreinage mécanique, il suffit de faire tourner la vis dans le perçage, de telle sorte que, par l'intermédiaire des moyens de transfert du déplacement, elle sollicite le piston de freinage dans son deuxième sens de déplacement axial. Les moyens de transfert du déplacement transforment le déplacement sensiblement radial de la vis en un déplacement axial du piston.

Lorsque l'espace subsistant dans la région des extrémités axiales du moteur est réduit, ou que ses extrémités ne sont pas accessibles parce que le moteur est intégré axialement dans la transmission d'un véhicule, la face axiale du carter reste, quant à elle, facilement accessible et la vis peut être actionnée sans difficulté à partir de cette face.

En choisissant convenablement les moyens de transfert du déplacement, par exemple sous la forme d'une ou plusieurs billes de transfert aptes à coopérer (directement ou indirectement) avec la tige de la vis ou, en général, sous la forme d'un organe de roulement tel qu'un galet, on peut obtenir un effet démultiplicateur, de telle sorte qu'un effort radial relativement faible appliqué sur la vis cause effectivement le déplacement axial du piston de freinage.

Il est avantageux que le dispositif comporte deux systèmes de défreinage situés à des positions symétriques par rapport à l'axe de rotation. Cette disposition permet, dans la mesure où les moyens de freinage et la zone d'appui du piston ont globalement une symétrie de révolution par rapport à l'axe de rotation, de répartir les efforts de déplacement axial sur la circonférence du piston.

Avantageusement, pour chaque système de défreinage, la paroi de fond du perçage forme une première rampe inclinée vers l'axe de rotation dans le sens allant en se rapprochant de la première face du piston et les moyens de transfert comprennent une bille de transfert, disposée sur cette rampe et apte à rouler sur cette dernière sous l'effet du vissage de la vis.

Comme on le verra dans la suite, la bille peut directement coopérer avec l'extrémité de la vis ou avec un organe intermédiaire disposé entre ladite bille et la vis, cet organe intermédiaire étant par exemple un bouchon d'étanchéité.

Selon une variante, pour chaque système de défreinage, le perçage s'étend selon un tronçon unique sensiblement radial et la première face du piston présente une deuxième rampe, située sensiblement en regard de la première rampe et inclinée en sens inverse, la bille de transfert étant maintenue entre lesdites première et deuxième rampes et l'extrémité de la vis (un organe intermédiaire d'étanchéité étant toutefois éventuellement disposé entre la bille et la vis).

La deuxième rampe est par exemple réalisée sur un chanfrein ménagé dans la région du bord externe de la première face du piston, ou sur une encoche située dans la première face du piston.

Selon une autre variante, pour chaque système de défreinage, le perçage s'étend selon un tronçon unique sensiblement radial et la première face du piston présente un renfoncement apte à loger partiellement deux billes réceptrices, de telle sorte que ces dernières fassent saillie sur ladite première face et coopèrent avec la bille de transfert.

Selon encore une autre variante, le perçage comporte un premier tronçon sensiblement radial et un deuxième tronçon sensiblement axial qui est ouvert sur la deuxième extrémité dudit perçage, la première rampe étant ménagée dans la zone de raccordement entre lesdits premier et deuxième tronçons, au moins une bille réceptrice étant disposée dans le deuxième tronçon, et la bille de transfert étant apte, lors du vissage de la vis, à coopérer avec la bille réceptrice pour contraindre cette dernière à dépasser au-delà de la deuxième extrémité du perçage.

Avantageusement, pour chaque système de défreinage, le dispositif comporte des moyens pour empêcher la sortie du ou des organes intermédiaires hors du perçage lorsque la vis est ôtée dudit perçage.

Le dispositif de freinage conforme à l'invention peut équiper un moteur hydraulique comprenant :
- un carter comportant des conduits principaux d'alimentation et d'échappement de fluide ;
- un organe de réaction solidaire du carter ;
- un bloc-cylindres, qui est monté à rotation relative autour d'un axe de rotation par rapport audit organe de réaction et qui comporte une pluralité d'ensembles de cylindres et de pistons, susceptibles d'être alimentés en fluide sous pression ;
- un distributeur interne de fluide, solidaire du carter vis-à-vis de la rotation autour de l'axe de rotation et comportant des conduits de distribution susceptibles de mettre les cylindres en communication avec les conduits principaux d'alimentation et d'échappement de fluide ; et
- un arbre interne, s'étendant à l'intérieur du carter coaxialement à l'axe de rotation et solidaire du bloc-cylindres vis-à-vis de la rotation autour de l'axe de rotation.

Le carter de frein du dispositif de freinage est constitué par une partie du carter du moteur, l'organe interne de ce dispositif étant constitué par l'arbre interne au moteur. Cet arbre peut directement être l'arbre moteur ou un arbre de frein, aligné avec l'arbre moteur à l'intérieur du carter.

L'invention sera bien comprise et ses avantages apparaîtront mieux à la lecture de la description détaillée qui suit, de modes de réalisation représentés à titres d'exemples non limitatifs. La description se réfère aux dessins annexés sur lesquels :
- la figure 1 est une coupe axiale d'un moteur équipé d'un dispositif de freinage conforme à l'invention,
- la figure 2 est une coupe axiale d'un dispositif de freinage selon une variante de réalisation,
- la figure 3 montre un détail d'une réalisation du dispositif de la figure 2,
- la figure 4 est une coupe axiale d'un dispositif de freinage selon une autre variante,
- la figure 5 est une vue schématique partielle de la variante de la figure 4, selon la ligne V-V de cette figure,
- la figure 6 est une coupe axiale d'une autre variante de réalisation,
- la figure 7 est une coupe partielle selon la ligne VII-VII de la figure 6, et
- les figures 8 et 9 sont deux vues partielles en coupe axiale, montrant deux autres variantes.

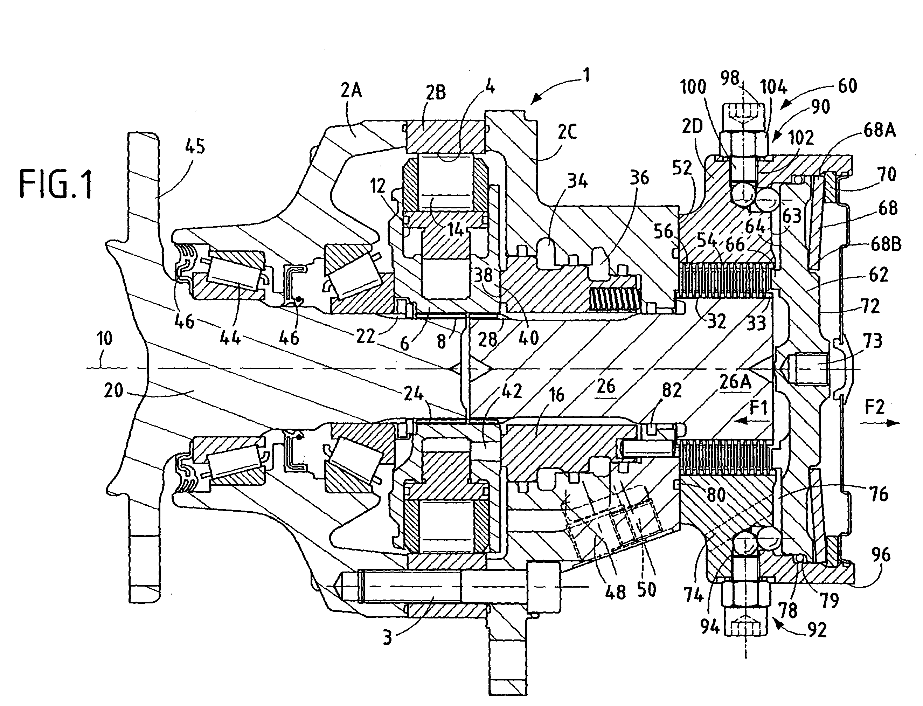

La figure 1 montre un moteur hydraulique 1 qui comporte :
- un carter fixe en quatre parties 2A, 2B, 2C et 2D, assemblées par des vis 3 ;
- une came de réaction ondulée 4, ménagée sur la périphérie interne de la partie 2B du carter ;
- un bloc-cylindres 6 qui présente un alésage central 8 et est monté à rotation relative autour d'un axe de rotation 10 par rapport à la came 4, ce bloc-cylindres comprenant une pluralité de cylindres radiaux 12 susceptibles d'être alimentés en fluide sous pression, à l'intérieur desquels sont montés coulissants des pistons 14 ;
- un distributeur interne de fluide 16, solidaire du carter vis-à-vis de la rotation autour de l'axe 10 et comportant des conduits de distribution susceptibles de communiquer avec les cylindres 12 ;
- un arbre 20 qui s'étend à l'intérieur du carter coaxialement à l'axe de rotation 10 et est en prise avec le bloc-cylindres par l'intermédiaire de cannelures axiales 22 réalisées à la périphérie de l'arbre et de cannelures 24 réalisées sur l'alésage 8 du bloc-cylindres ; et
- un arbre de frein 26, également en prise avec le bloc-cylindres, par l'intermédiaire de cannelures 28 qui équipent sa périphérie externe et coopèrent avec les cannelures 24 de l'alésage du bloc-cylindres, cet arbre 26 traversant un alésage 30 du distributeur 16 et comprenant une extension 26A, qui est située au-delà du distributeur et qui porte des lamelles de disques de frein 32.

Des gorges 34 et 36 sont ménagées entre la partie 2C du carter et le distributeur interne 16. Des conduits de distribution (non représentés) débouchent d'une part, dans l'une de ces gorges et, d'autre part, dans la face de distribution 38 du distributeur 16 qui est perpendiculaire à l'axe 10 et en appui contre la face de communication 40 du bloc-cylindres. Dans cette face 40, qui est également perpendiculaire à l'axe 10, débouchent des conduits de cylindres 42 qui sont agencés de manière à pouvoir être mis en communication avec les conduits de distribution.

Le moteur représenté comporte une seule cylindrée de fonctionnement, mais on pourrait également utiliser un moteur à deux cylindrées.

L'arbre 20 est monté rotatif par rapport au carter, autour de l'axe de rotation 10, par l'intermédiaire de roulements à rouleau 44. L'extrémité libre de cet arbre située en dehors du carter comporte un plateau d'accouplement 45 permettant de le solidariser avec un organe qui doit être entraîné en rotation par le moteur. Divers joints 46 assurent l'étanchéité de l'espace interne du carter, par rapport à l'extérieur du moteur.

Ce dernier comporte encore des conduits principaux d'alimentation et d'échappement de fluide 48 et 50, réalisés dans la partie 2C du carter et débouchant respectivement dans les gorges 34 et 36.

Il faut noter que, dans l'exemple représenté, l'arbre de frein 26 est une pièce différente de l'arbre moteur 20. Il pourrait toutefois être réalisé sous la forme d'un prolongement de l'arbre moteur 20 s'étendant dans l'alésage 30 du distributeur et comportant l'extension 26A qui dépasse au-delà de la face radiale du distributeur opposée au bloc-cylindres, cette extension portant des moyens de freinage.

Le moteur 1 comporte un dispositif de freinage 60 qui comprend un carter de frein 2D, qui constitue une quatrième partie du carter, raccordée à la partie 2C par des vis (non représentées). Globalement, le contour de ce carter de frein 2D présente une symétrie de révolution par rapport à l'axe de rotation 10. L'arbre de frein 26, par son prolongement 26A, qui dépassé en fait au-delà de l'extrémité axiale 52 de la partie 2C du carter opposée au bloc-cylindres 6, s'étend à l'intérieur du carter de frein 2D. Ce prolongement 26A constitue l'organe interne au carter de frein précédemment évoqué.

Le dispositif 60 comprend une première série de lamelles annulaires de frein 54 ou "disques de frein" qui sont solidaires en rotation du carter de frein 2D. A cet effet, les lamelles présentent, sur leurs extrémités radiales externes, des indentations de forme complémentaire de la forme de cannelures 56 réalisées sur un alésage central du carter de frein 2D. Les lamelles de la série 32 précédemment évoquées sont, quant à elles, solidaires en rotation de l'arbre de frein 26, leurs extrémités radiales internes présentant à cet effet des indentations de forme complémentaire de la forme de cannelures axiales 33 réalisées sur la périphérie du prolongement 26A de l'arbre de frein.

Le dispositif 60 comporte encore un piston de freinage 62 dont la face 64 qui est tournée vers l'intérieur du carter 2D (c'est-à-dire qu'elle est dirigée vers le distributeur et le bloc-cylindres) présente une zone d'appui 66 dont l'extrémité s'étend sensiblement transversalement par rapport à l'axe 10. Une rondelle ressort 68 sollicite élastiquement le piston de freinage 62 pour l'inciter à se déplacer dans un premier sens F1, vers sa position de freinage représentée sur la figure 1, dans laquelle la zone d'appui 66 sollicite axialement les lamelles 32 et 54 en contact de freinage. Pour ce faire, l'extrémité radiale externe 68A de la rondelle 68 est calée axialement par rapport au carter 2D à l'aide d'un anneau d'arrêt 70, tandis que son extrémité radiale interne 68B coopère avec la face externe 72 du piston 62 opposée à sa face 64.

Les lamelles 54 sont intercalées entre les lamelles 32 et réciproquement. On comprend que lorsque la zone d'appui 66 pousse axialement les lamelles dans le sens F1, un frottement de freinage s'établit entre les faces radiales des lamelles qui coopèrent les unes avec les autres, ces lamelles étant maintenues axialement par la face 52 du carter 2C qui forme un épaulement du côté opposé à la zone d'appui 66.

Dans l'exemple représenté, les lamelles 54 et 32 constituent respectivement les premiers et les deuxièmes moyens de freinage précédemment évoqués. On pourrait utiliser d'autres types de moyens de freinage, par exemple deux parties complémentaires d'un crabot, l'essentiel étant que ces moyens de freinage puissent être engagés en contact de freinage ou désengagés de ce contact par un déplacement axial relatif.

Le dispositif de freinage 60 comporte encore des moyens hydrauliques permettant de déplacer axialement le piston de freinage 62 dans le sens F2, contre l'action de la rondelle ressort 68, pour amener ce piston dans une position de défreinage dans laquelle le contact de freinage est supprimé. Le sens F2 est opposé au sens F1, on comprend en effet que lorsque la poussée de la zone d'appui 66 dans le sens F1 sur les lamelles cesse, les lamelles 32 et 54 peuvent librement tourner les unes par rapport aux autres, leur contact de frottement étant supprimé.

Ces moyens hydrauliques comprennent un conduit 74 d'alimentation en fluide de freinage, indiqué en traits interrompus sur la figure 1 (il ne se trouve pas dans le plan de la figure) et une chambre de défreinage 76 ménagée du côté de la première face 64 du piston de freinage, chambre dans laquelle débouche le conduit 74. Classiquement, cette chambre est fermée par un joint d'étanchéité 79 entre la face axiale externe 65 du piston et la face axiale interne 78 du carter 2D, par un joint 80 entre les parties 2C et 2D du carter et par un joint 82 entre la périphérie interne du carter 2C et la périphérie externe de l'arbre de frein 26. On comprend que l'alimentation de la chambre 76 en fluide sous pression tend effectivement à solliciter le piston 62 en déplacement dans le sens F2.

Le dispositif de freinage 60 comporte encore des moyens de défreinage mécanique qui servent à amener et à maintenir le piston de freinage 62 dans sa position de défreinage, que la chambre 76 soit ou non alimentée en fluide sous pression. Cette position de défreinage mécanique est en particulier utilisée lorsque l'on souhaite remorquer un véhicule dont la transmission est équipée du moteur 1.

Les moyens de défreinage équipant le dispositif de la figure 1 comprennent deux systèmes de défreinage, respectivement 90 et 92, qui sont disposés dans des positions symétriques par rapport à l'axe de rotation 10. Ces deux systèmes sont analogues et, pour simplifier, on ne décrira que l'un d'entre eux, le système 90. Ce dernier comporte un perçage 94 qui est réalisé dans le carter 2D et qui s'ouvre d'une part, sur la face externe 96 sensiblement axiale du carter 2D et, d'autre part, à proximité de la face 64 du piston 62. La tige d'une vis 98 est mobile dans un tronçon 100 du perçage 94, tronçon qui est sensiblement radial, à partir de la face axiale 96 du carter 2D et qui présente au moins une région taraudée 102 avec laquelle coopère la tige filetée de la vis. L'axe du tronçon 100 est radial ou tout au plus incliné de quelques degrés (au plus une dizaine de degrés) par rapport à un plan radial.

Une entretoise 104 est disposée entre la tête de la vis 98 et la paroi axiale 96 du carter 2D. Cette entretoise constitue une sécurité, qui sert à éviter que la vis 98 ne soit vissée malencontreusement, auquel cas le moteur ne pourrait plus freiner normalement. Lorsque, le moteur étant arrêté, on souhaite utiliser le défreinage mécanique, il faut d'abord dévisser la vis 98 et la sortir du perçage 94, pour enlever l'entretoise 104 avant d'introduire à nouveau la vis dans le perçage qui peut alors être vissée normalement jusqu'à une position dans laquelle elle sollicite les moyens de transfert de manière à assurer le défreinage mécanique.

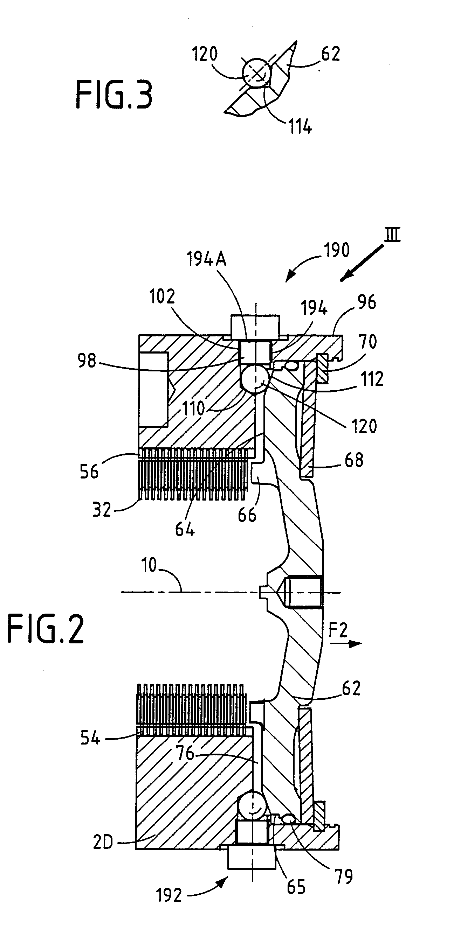

Les moyens de défreinage mécaniques sont décrits plus en détail en référence aux figures 2 à 7, sur lesquelles les éléments analogues à ceux de la figure 1 sont affectés des mêmes références.

Sur la variante de la figure 2, les systèmes de défreinage 190 et 192 comportent, outre la vis 98, un perçage 194 constitué par un unique tronçon radial ou sensiblement radial et, par conséquent, extrêmement simple à usiner. La première extrémité 194A du perçage s'ouvre dans la face axiale 96 du carter 2D. Sa deuxième extrémité débouche quant à elle dans la chambre de défreinage 76 et s'ouvre en regard de la face 64 du piston 62. Cette deuxième extrémité présente toutefois une paroi de fond 110 qui ferme partiellement le perçage du côté de l'axe de rotation 10. Une bille de transfert 120 est disposée à l'intérieur du perçage 194 et repose sur la paroi de fond 110. Cette bille 120 dépasse de l'ouverture de la deuxième extrémité du perçage 194 et est par conséquent apte à coopérer avec la face 64 du piston 62.

La figure 2 montre la position de défreinage, les vis des systèmes de défreinage 190 et 192 étant vissées dans les taraudages 102 et sollicitant les billes 120 de telle sorte qu'elles repoussent le piston 62 dans le sens F2 et que la zone d'appui 66 soit écartée des lamelles de freinage.

Plus précisément, la paroi de fond 110 du perçage 194 forme une rampe qui est inclinée vers l'axe de rotation 10 dans le sens allant en se rapprochant de la face 64 du piston, c'est-à-dire dans le sens F2. La bille 120 coopère d'une part, avec cette rampe 110 et, d'autre part, avec l'extrémité libre de la tige de la vis. On comprend que lorsque cette dernière est vissée, elle repousse la bille 120 contre la rampe 110 qui, du fait de son inclinaison, tend à faire dépasser davantage la bille 120 de l'ouverture de la deuxième extrémité du perçage 194, c'est-à-dire à la repousser contre la face 64 du piston 62. En roulant sur cette rampe, la bille 120 transforme donc le mouvement radial de vissage de la vis en un mouvement axial dans le sens F2.

Pour coopérer avec la bille 120, la face 64 du piston présente une deuxième rampe 112, qui est située sensiblement en regard de la première rampe 110 et qui est inclinée en sens inverse, c'est-à-dire qu'elle tend à se rapprocher de l'axe de rotation 10 dans le sens F1. De préférence, cette rampe est ménagée dans la région du bord externe de la face 64. Elle peut par exemple, comme sur la figure 2, être réalisée sur un chanfrein ménagé dans la région de ce bord externe, à la jonction entre la face 64 du piston 62 et la face axiale externe 65 de ce dernier.

La figure 3 est une vue de détail en coupe partielle montrant une variante de réalisation de la deuxième rampe, considérée selon une direction correspondant à la flèche III de la figure 2. On y reconnaît la bille 120 et le piston 62. Sur cette figure 3, la rampe est réalisée sur une encoche en V 114, située sur la face 64 du piston 62 et de préférence, comme le chanfrein 112, à la jonction des faces 64 et 65 de ce piston. La bille 120 coopère avec les deux faces de l'encoche en V 114, qui jouent toutes deux le rôle de la deuxième rampe et qui calent cette bille dans le sens circonférentiel du piston.

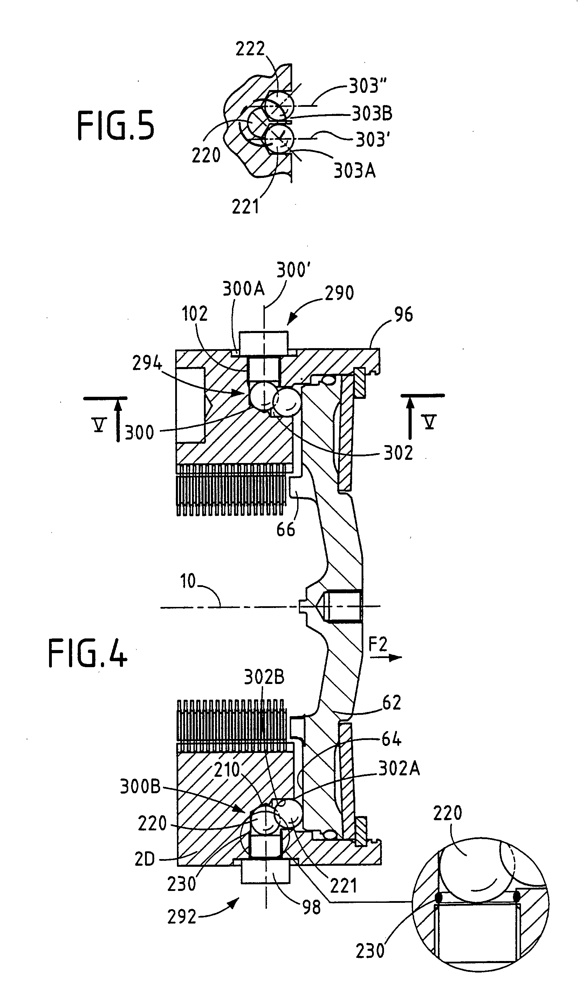

Dans la variante de la figure 4, le perçage 294 de chacun des systèmes de défreinage 290 et 292 comporte un premier tronçon 300 sensiblement radial, dans lequel est réalisé le taraudage 102 et un deuxième tronçon 302 sensiblement axial. La première extrémité 300A du tronçon 300 est ouverte sur la face axiale 96 du carter 2D, tandis que sa deuxième extrémité 300B est directement raccordée au deuxième tronçon 302 dont l'extrémité libre 302A, contenue dans un plan sensiblement radial à l'axe de rotation 10, s'ouvre en regard de la face 64 du piston 62.

Le perçage 294 présente une paroi de fond qui le ferme du côté de l'axe de rotation 10. Cette paroi de fond est formée, pour partie, sur l'extrémité 300B du tronçon 300 et, pour le reste, sur la face axiale 302B du tronçon 302 qui est la plus proche de l'axe de rotation 10. Cette paroi de fond, plus précisément la partie de cette paroi formée sur l'extrémité 300B du tronçon 300, forme une rampe 210 qui est inclinée vers l'axe de rotation 10 dans le sens F2. Des billes de transfert 220, 221 et 222 sont disposées dans le perçage, la bille 220 étant apte à rouler sur la rampe 210, tandis que les billes 221 et 222 roulent sur la partie axiale 302B de la paroi de fond du perçage.

La disposition de ces billes est plus clairement visible sur la figure 5. La bille 220 joue le rôle d'une bille de transfert puisque c'est elle qui, en roulant sur la rampe 210, transforme en un déplacement axial dans le sens F2, le déplacement radial centripète de la vis 98. Les billes 221 et 222 sont quant à elles des billes réceptrices que la bille 220 contraint à rouler sur la paroi 302B lorsqu'elle est poussée sur la rampe 210, pour les amener à dépasser au-delà de l'extrémité 302A du perçage 294 et, par conséquent, à coopérer avec la face 64 du piston 62 en repoussant ce dernier dans le sens F2. Dans l'exemple représenté sur les figures 4 et 5, deux billes réceptrices sont présentes, le tronçon 302 du perçage 294 étant constitué par deux alésages adjacents 303A et 303B qui communiquent entre eux et communiquent également avec le tronçon 300 dont l'axe 300' se trouve dans un plan médiateur entre les axes 303' et 303" des alésages 303A et 303B.

Cette disposition permet de répartir de façon égale entre les billes 221 et 222 les efforts exercés par la bille 220 lors du vissage de la vis. On notera que les billes réceptrices coopèrent directement avec la face axiale 64 du piston 302, dans une région de cette dernière voisine de son bord externe. On peut prévoir de doter cette face d'un renfoncement de calage pour lesdites billes réceptrices.

On pourrait bien entendu choisir de n'utiliser qu'une seule bille réceptrice, pour coopérer avec la bille de transfert 220, auquel cas le tronçon axial 62 serait constitué par un alésage unique dont l'axe serait situé dans le même plan que l'axe du tronçon 300.

La référence 230 de la figure 4 désigne un joint (visible seulement dans l'agrandissement) disposé dans une gorge annulaire pratiquée dans le premier tronçon 300 du perçage 194. Cette gorge se situe au voisinage de l'extrémité intérieure du taraudage 102. Le joint 230 est disposé de manière à faire radialement saillie à l'intérieur du perçage. De cette manière, Irosque la vis est ôtée, par exemple, pour enlever l'entretoise de sécurité, le joint 230 empêche les billes des moyens de défreinage de sortir du perçage.

Bien entendu, des organes autres qu'un joint peuvent remplir la même fonction ; il s'agit en général d'organes aptes à diminuer localement le diamètre du perçage. Un anneau fendu expansif calé dans une gorge annulaire ou un anneau dentelé conviennent puisqu'ils peuvent facilement être introduits dans le perçage et se caler dans ce dernier.

Le joint 230 présente l'avantage d'assurer l'étanchéité en coopérant avec la bille lorsque la vis est enlevée.

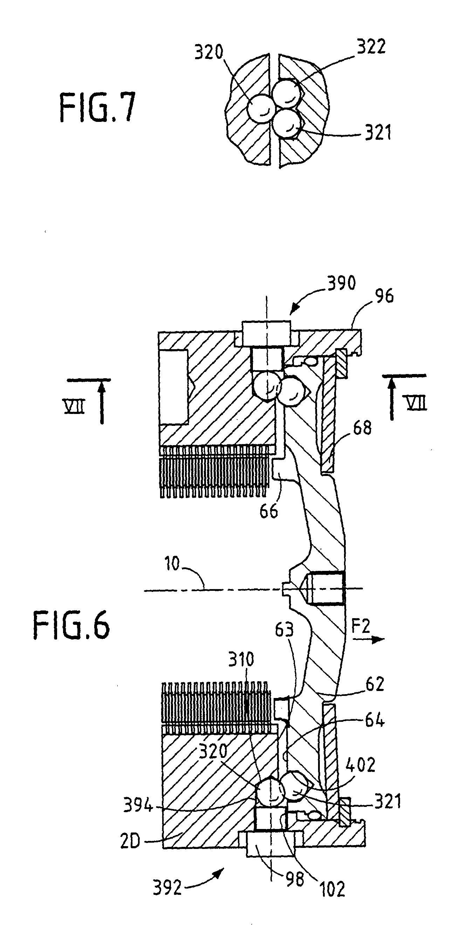

En référence aux figures 6 et 7, on décrit maintenant une autre variante de réalisation utilisant également une ou plusieurs billes réceptrices. Sur la figure 6, les systèmes de défreinage 390 et 392 comprennent chacun un perçage 394 qui s'étend selon un tronçon unique sensiblement radial. Ce perçage est analogue au perçage 194 de la figure 2 et, comme ce dernier, sa paroi de fond comporte une rampe 310.

La bille de transfert 320, comme la bille 120 de la figure 2, dépasse au-delà de l'ouverture du perçage 394 située en regard de la face 64 du piston 62. Cette bille 320 coopère avec des billes réceptrices 321 et 322 qui sont au moins partiellement logées dans un renfoncement 402 ménagé sur la face 64 du piston 62. Deux billes réceptrices étant présentes, ce renfoncement 402 peut être réalisé à l'aide de deux alésages analogues aux alésages 303A et 303B de la figure 5, à ceci près qu'ils sont ménagés dans la face 64 du piston et non dans la partie 2D du carter. La profondeur du renfoncement 402 est inférieure au diamètre des billes réceptrices 321 et 322, de telle sorte que ces dernières font saillie sur la face 64. De son côté, la bille 320 fait saillie au-delà de l'ouverture de la deuxième extrémité du perçage 394, sur la face radiale 63 du carter 2D qui est formée en épaulement et qui, par conséquent, est située en regard de la face 64. En fait, selon le diamètre que l'on choisit pour les billes 320, 321 et 322, il peut être suffisant que la bille 320 soit apte à dépasser au-delà du perçage 394, tandis que les billes 321 et 322 seraient pratiquement entièrement contenues dans le renfoncement 402.

Bien entendu, on pourrait n'utiliser qu'une seule bille réceptrice, auquel cas le renfoncement 402 serait constitué par un alésage unique dont l'axe serait situé dans le même plan que l'axe du perçage 394.

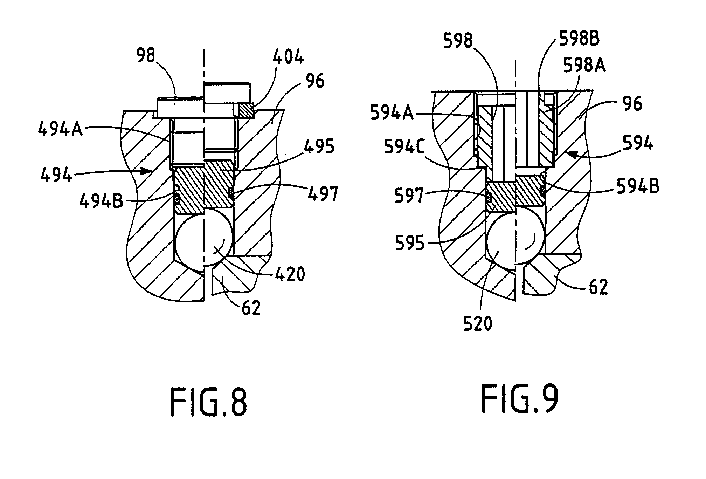

On décrit maintenant les figures 8 et 9, qui montrent deux variantes de réalisation dans lesquelles chaque système de défreinage comporte des moyens pour assurer une étanchéité permanente dans le perçage. Par "étanchéité permanente", on entend que ces moyens empêchent l'échappement de fluide en dehors du perçage (celui-ci communiquant généralement avec la chambre de défreinage) même lorsque la vis est manipulée pour activer le défreinage. En particulier, comme on l'a indiqué en référence à la figure 1, il est fréquent que la vis doive être sortie du perçage pour enlever une entretoise de sécurité avant d'être remise en place et vissée pour assurer le défreinage. Dans ce cas, les moyens d'étanchéité permanente permettent d'assurer l'étanchéité même lorsque la vis est provisoirement enlevée.

Sur la figure 8, on a représenté seulement en coupe axiale le voisinage immédiat du perçage 494. Sur la partie droite de la figure, on a représenté la position de la vis lorsque l'entretoise 404 est mise en place. Sur la partie gauche, l'entretoise a été enlevée et la vis a avancé dans le perçage 494 pour solliciter la bille 420 de telle sorte que celle-ci repousse le piston de freinage 62 pour assurer le défreinage. Dans cet exemple, les moyens pour assurer l'étanchéité permanente sont constitués par un bouchon d'étanchéité 495 qui est disposé entre l'extrémité de la vis 98 et la bille 420. Ce bouchon est pourvu d'un joint périphérique d'étanchéité 497 qui coopère avec la paroi du perçage 494. De préférence, comme on le voit dans la figure, le bouchon est placé de telle sorte qu'il se trouve dans une région non taraudée du perçage 494.

La figure 9 montre une variante utilisant une vis 598 sans entretoise. Le bouchon 595, équipé du joint 597, est analogue au bouchon 495 de la figure 8. Le perçage 594 ou, plus généralement, le "premier tronçon" de ce perçage présente un épaulement 594C qui établit la démarcation entre une région 594A de plus grand diamètre qui présente le taraudage avec lequel coopère la vis, cette région étant située à proximité immédiate de la première extrémité du perçage, et une région 594B, de plus petit diamètre, non taraudée et dans laquelle se trouve le bouchon 595.

La vis 598 présente elle-même une portion large 598A et une extrémité de diamètre plus faible 598B. Dans la position de fonctionnement du moteur illustrée sur la partie droite de la figure 9, c'est la portion de diamètre plus important 598A qui est dirigée vers le fond du perçage 594, de telle sorte que l'extrémité libre de la vis coopère avec l'épaulement 594C, sans solliciter la bille 520 pour repousser le piston 62. Pour assurer le défreinage mécanique, on dévisse la vis 598 en faisant coopérer une clé avec sa périphérie intérieure conformée de manière appropriée (elle présente par exemple un trou traversant à six pans). Ensuite, il suffit de retourner la vis et de l'insérer de telle sorte que sa portion de petit diamètre 598B se trouve vers le fond de l'alésage comme on le voit sur la partie gauche de la figure 9, auquel cas, la vis repousse le bouchon 595 qui lui-même vient solliciter la bille 520 de telle sorte qu'elle repousse le piston 62.

Sur les figures 8 et 9, on a représenté les variantes comportant le bouchon d'étanchéité avec un perçage du même type que celui que présentait la figure 2, comportant un unique tronçon sensiblement radial. Bien évidemment, le bouchon d'étanchéité peut, de manière générale, être disposé dans le premier tronçon du perçage des autres variantes, auquel cas il est disposé entre l'extrémité de la vis et "l'organe intermédiaire" des moyens de transfert du déplacement, c'est-à-dire en général un galet ou la bille de transfert.

On utilisera de préférence deux systèmes de défreinage situés diamétralement par rapport au carter 2D. On peut également utiliser davantage de systèmes de défreinage régulièrement répartis circonférentiellement.

On notera que dans toutes les variantes décrites ci-dessus, la course maximale de la vis est définie par la venue en butée d'une partie de la vis (par exemple sa tête) contre une région du premier tronçon du perçage (par exemple la première extrémité du perçage, située sur la face axiale 96 du carter 2D ou l'épaulement de ce premier tronçon). Cette venue en butée conditionne le déplacement maximal de la bille de transfert, de sorte qu'il suffit de dimensionner correctement le premier tronçon du perçage par rapport à la longueur de la tige de la vis pour délimiter la course maximale de défreinage en vue de rendre impossible la toute déformation de la rondelle 68 au-delà de sa limite d'élasticité. En utilisant plusieurs systèmes de défreinage, on fait en sorte que chacun d'entre eux exerce une partie des efforts nécessaires sur le piston axial pour l'amener dans sa position de défreinage ; il en résulte un effet de démultiplication qui rend seulement nécessaire un faible effort radial sur la vis et permet donc de doter le perçage d'un diamètre relativement faible.

Les perçages des systèmes de défreinage peuvent jouer le rôle de perçages de purge du frein. Il suffit en effet d'ôter les vis pour que le jeu existant entre les billes et l'alésage permette la purge du frein.

Enfin, on notera que sur toutes les variantes représentées, la face externe 72 du piston 62 présente un filetage central 73. Ce dernier permet d'utiliser le même type de piston, soit pour un défreinage classique à l'aide d'une vis axiale, soit pour le défreinage conforme à la présente invention. Il en résulte une économie substantielle de fabrication.

Il faut encore noter que le système de défreinage conforme à la présente invention, en permettant d'appliquer les forces de défreinage dans la région de la périphérie de la face 64 du piston 62, rend possible l'utilisation d'un piston ayant la forme d'une rondelle ouverte, compatible avec l'utilisation d'un arbre moteur traversant le moteur de part en part et dépassant aux deux extrémités de ce dernier, pour être intégré axialement dans la transmission d'un véhicule.

## Revendications

1. Dispositif de freinage comprenant :
un carter de frein (2D) à l'intérieur duquel est disposé un organe interne (26A), ledit carter et ledit organe interne étant susceptibles de tourner l'un par rapport à l'autre autour d'un axe de rotation (10),
des premiers moyens de freinage (54) solidaires en rotation du carter de frein,
des deuxièmes moyens de freinage (32) solidaires en rotation de l'organe interne,
un piston de freinage (62) présentant une première face (64), tournée vers l'intérieur du carter (2D) et ayant une zone d'appui (66) s'étendant sensiblement transversalement par rapport à l'axe de rotation,
des moyens élastiques (68) pour déplacer axialement le piston de freinage (62) dans un premier sens (F1), vers une position de freinage dans laquelle la zone d'appui (66) sollicite axialement les premiers et deuxièmes moyens de freinage (32, 54) en contact de freinage,
des moyens hydrauliques (74, 76) pour déplacer axialement ledit piston de freinage (62) dans un deuxième sens (F2), vers une position de défreinage dans laquelle le contact de freinage est supprimé, et
des moyens de défreinage mécanique pour amener et maintenir le piston de freinage (62) dans la position de défreinage, lesdits moyens comprenant une vis (98) coopérant avec un taraudage (102),
les premiers et deuxièmes moyens de freinage (32, 54), ainsi que la zone d'appui (66) du piston de freinage (62) ayant globalement une symétrie de révolution par rapport à l'axe de rotation (10),
**caractérisé en ce que** les moyens de défreinage mécanique comprennent au moins deux systèmes de défreinage (90, 92 ; 190, 192 ; 290, 292 ; 390, 392) comportant, chacun :
- un perçage (94, 194, 294, 394, 494, 594), réalisé dans le carter (2D) et présentant une première extrémité ouverte située dans une face externe (96) du carter (2D) sensiblement axiale et une deuxième extrémité ouverte située en regard de la première face (64) du piston de freinage (62), le perçage s'étendant sensiblement radialement par rapport à l'axe de rotation à partir de sa première extrémité, au moins sur un premier tronçon (100, 194, 300, 394, 494, 594) qui est taraudé dans une région (102, 494A, 594A) voisine de la première extrémité du perçage, ce dernier présentant une paroi de fond (110 ; 210, 302B ; 310) située au voisinage de sa deuxième extrémité et fermant au moins partiellement ledit perçage du côté de l'axe de rotation (10),
- une vis (98), disposée dans ladite région taraudée (102, 494A, 594A) et susceptible, par vissage dans ledit premier tronçon, d'être déplacée sensiblement radialement par rapport à l'axe de rotation, et
- des moyens de transfert du déplacement aptes, lors du vissage de la vis (98), à solliciter le piston (62) vers sa deuxième position, ces moyens de transfert comprenant au moins un organe intermédiaire (120, 220, 320, 420, 520) apte, sous l'effet du vissage de la vis, à rouler sur ladite paroi de fond (110, 210, 310) du perçage (94, 194, 294, 394, 494, 594) pour se déplacer sensiblement axialement (F2) vers la première face (64) du piston de freinage (62).

2. Dispositif selon la revendication 1, **caractérisé en ce que**, pour chaque système de défreinage (90, 92 ; 190, 192 ; 290, 292 ; 390, 392), la paroi de fond du perçage (94 ; 194 ; 294 ; 394 ; 494 ; 594) forme une première rampe (110 ; 210 ; 310), inclinée vers l'axe de rotation (10) dans le sens (F2) allant en se rapprochant de la première face (64) du piston (62) et **en ce que** les moyens de transfert comprennent une bille de transfert (120 ; 220 ; 320 ; 420 ; 520), disposée sur cette rampe (110 ; 210 ; 310) et apte à rouler sur cette dernière sous l'effet du vissage de la vis (98).

3. Dispositif selon la revendication 2, **caractérisé en ce que**, pour chaque système de défreinage (190, 192), le perçage (194)s'étend selon un tronçon unique sensiblement radial et la première face (64) du piston (62) présente une deuxième rampe (112, 114), située sensiblement en regard de la première rampe (110) et inclinée en sens inverse, la bille de transfert (120) étant maintenue entre lesdites première et deuxième rampes (110 ; 112, 114) et l'extrémité de la vis (98).

4. Dispositif selon la revendication 3, **caractérisé en ce que** la deuxième rampe est réalisée sur un chanfrein (112) ménagé dans la région du bord externe de la première face (64) du piston (62).

5. Dispositif selon la revendication 3, **caractérisé en ce que** la deuxième rampe est réalisée sur une encoche (114) située dans la première face (64) du piston (62).

6. Dispositif selon la revendication 2, **caractérisé en ce que**, pour chaque système de défreinage, le perçage (394) s'étend selon un tronçon unique sensiblement radial et la première face (64) du piston (62) présente un renfoncement (402) apte à loger partiellement deux billes réceptrices (321, 322), de telle sorte que ces dernières fassent saillie sur ladite première face (64) et coopèrent avec la bille de transfert (320).

7. Dispositif selon la revendication 2, **caractérisé en ce que**, pour chaque système de défreinage (290, 292), le perçage (294) comporte un premier tronçon (300) sensiblement radial et un deuxième tronçon (302) sensiblement axial qui est ouvert sur la deuxième extrémité (302A) dudit perçage (294), la première rampe (210) étant ménagée dans la zone de raccordement entre lesdits premier et deuxième tronçons (300, 302), au moins une bille réceptrice (221, 222) étant disposée dans le deuxième tronçon (302), la bille de transfert (220) étant apte, lors du vissage de la vis (98), à coopérer avec la bille réceptrice (221, 222) pour contraindre cette dernière à dépasser au-delà de la deuxième extrémité (302A) du perçage (294).

8. Dispositif selon l'une quelconque des revendications 1 à 7, **caractérisé en ce que**, pour chaque système de défreinage, il comporte des moyens (230) pour empêcher la sortie du ou des organes intermédiaires (120, 220, 320) hors du perçage (94, 194, 294, 394) lorsque la vis (98) est ôtée dudit perçage.

9. Dispositif selon l'une quelconque des revendications 1 à 8, **caractérisé en ce qu'**il comporte deux systèmes de défreinage situés à des positions symétriques par rapport à l'axe de rotation.

10. Dispositif selon l'une quelconque des revendications 1 à 9, **caractérisé en ce qu'**il comporte, pour chaque système de défreinage, des moyens (495, 595) pour assurer une étanchéité permanente dans le perçage (494, 594).

11. Dispositif selon la revendication 10, **caractérisé en ce qu'**il comporte, pour chaque système de défreinage, un bouchon d'étanchéité (495 ; 595) qui est disposé dans le premier tronçon du perçage (494, 594), entre l'extrémité de la vis (98) et ledit au moins un organe intermédiaire (420, 520).

12. Moteur hydraulique comprenant :
- un carter (2A, 2B, 2C, 2D) comportant des conduits principaux d'alimentation et d'échappement de fluide (48, 50) ;
- un organe de réaction (4) solidaire du Carter ;
- un bloc-cylindres (6), qui est monté à rotation relative autour d'un axe de rotation (10) par rapport audit organe de réaction (4) et qui comporte une pluralité d'ensembles de cylindres (12) et de pistons (14), disposés radialement par rapport à l'axe de rotation (10) et susceptibles d'être alimentés en fluide sous pression ;
- un distributeur interne de fluide (16), solidaire du carter (2A, 2B, 2C, 2D) vis-à-vis de la rotation autour de l'axe de rotation et comportant des conduits de distribution susceptibles de mettre les cylindres en communication avec les conduits principaux d'alimentation et d'échappement de fluide (48, 50) ; et
- un arbre interne (26), s'étendant à l'intérieur du carter (2A, 2B, 2C, 2D) coaxialement à l'axe de rotation (10) et solidaire du bloc-cylindres (6) vis-à-vis de la rotation autour de l'axe de rotation (10),
**caractérisé en ce qu'**il comporte un dispositif de freinage selon l'une quelconque des revendications 1 à 11, le carter de frein (2D) étant constitué par une partie du carter (2A, 2B, 2C, 2D) du moteur (1) et l'organe interne étant constitué par l'arbre interne (26).

## Claims

1. A braking device comprising:
a brake case (2D) in which there is disposed an internal member (26A), said case and said internal member being capable of rotating relative to each other about an axis of rotation (10);
first braking means (54) constrained to rotate with the brake case;
second braking means (32) constrained to rotate with the internal member;
a braking piston (62) having a first face (64) directed towards the inside of the case (2D) and having a thrust zone (66) extending substantially transversely relative to the axis of rotation;
resilient means (68) for displacing the braking piston (62) axially in a first direction (F1) towards a braking position in which the thrust zone (66) urges the first and second braking means (32, 54) axially into braking contact;
hydraulic means (74, 76) for displacing said braking piston (62) axially in a second direction (F2) towards a brake-release position in which the braking contact is eliminated; and
mechanical brake-release means for bringing the braking piston (62) into its brake-release position, and for holding it there, said means comprising a screw (98) cooperating with a tapped region (102);
the first and second braking means (32, 54) and the thrust zone (66) of the braking piston (62) being generally circularly symmetrical about the axis of rotation (10);
the braking device being **characterised in that** the mechanical brake-release means comprise at least two brake-release systems (90, 92; 190, 192; 290, 292; 390, 392) each comprising:
· a bore (94, 194, 294, 394, 494, 594) made in the case (2D) and having a first open end situated in a substantially axially-extending outer face (96) of the case (2D) and a second open end situated facing the first face (64) of the braking piston (62), the bore extending substantially radially relative to the axis of rotation from its first end, at least over a first segment (100, 194, 300, 394, 494, 594) which is tapped in a region (102, 494A, 594A) adjacent to the first end of the bore, which bore has an end wall (110; 210, 302B; 310) situated in the vicinity of its second end and at least partially closing said bore towards the axis of rotation (10);
· a screw (98) disposed in said tapped region (102, 494A, 594A) and suitable, on being screwed into said first segment, for moving substantially radially relative to the axis of rotation; and
· displacement transfer means suitable, when the screw (98) is screwed in, for urging the piston (62) towards its second position, said transfer means comprising at least one intermediate member (120, 220, 320, 420, 520) suitable, under drive from the screw being screwed in, for rolling on said end wall (110, 210, 310) of the bore (94, 194, 294, 394, 494, 594) to move substantially axially towards (F2) the first face (64) of the braking piston (62).

2. A device according to claim 1, **characterised in that**, for each brake-release system (90, 92; 190, 192; 290, 292; 390, 392) the end wall of the bore (94; 194; 294; 394; 494; 594) forms a first ramp (110; 210; 310) sloping towards the axis of rotation (10) in the direction (F2) going towards the first face (64) of the piston (62), and **in that** the transfer means comprise a transfer ball (120; 220; 320; 420; 520) disposed on said ramp (110; 210; 310) and suitable for rolling thereon under the effect of the screw (98) being screwed in.

3. A device according to claim 2, **characterised in that**, for each brake-release system (190, 192), the bore (194) extends along a single substantially radial segment, and the first face (64) of the piston (62) has a second ramp (112, 114) situated substantially facing the first ramp (110) and inclined in the opposite direction, the transfer ball (120) being held between said first and second ramps (110; 112, 114) and the end of the screw (98).

4. A device according to claim 3, **characterised in that** the second ramp is made on a chamfer (112) formed in the region of the outer edge of the first face (64) of the piston (62).

5. A device according to claim 3, **characterised in that** the second ramp is made on a notch (114) situated in the first face (64) of the piston (62).

6. A device according to claim 2, **characterised in that**, for each brake-release system, the bore (394) extends along a single substantially-radial segment, and the first face (64) of the piston (62) has a depression (402) suitable for partially receiving two receiver balls (321, 322) such that said balls project from said first face (64) and cooperate with the transfer ball (320).

7. A device according to claim 2, **characterised in that** for each brake-release system (290, 292), the bore (294) has a substantially radial first segment (300) and a substantially axial second segment (302) which is open at the second end (302A) of said bore (294), the first ramp (210) being provided in the connection zone between said first and second segments (300, 302), at least one receiver ball (221, 222) being disposed in the second segment (302), the transfer ball (220) being suitable, when the screw (98) is screwed in, for cooperating with the receiver ball (221, 222) to constrain said receiver ball to project beyond the second end (302A) of the bore (294).

8. A device according to any one of claims 1 to 7, **characterised in that**, for each brake-release system, it includes means (230) for preventing the intermediate member(s) (120, 220, 320) from leaving the bore (94, 194, 294, 394) when the screw (98) is removed from said bore.

9. A device according to any one of claims 1 to 8, **characterised in that** it comprises two brake-release systems situated in symmetrical positions about the axis of rotation.

10. A device according to any one of claims 1 to 9, **characterised in that** it includes, for each brake-release system, means (495, 595) for providing permanent sealing in the bore (494, 594).

11. A device according to claim 10, **characterised in that** it includes, for each brake-release system, a sealing plug (495; 595) which is disposed in the first length of the bore (494, 594) between the end of the screw (98) and said at least one intermediate member (420, 520).

12. A hydraulic motor comprising:
· a case (2A, 2B, 2C, 2D) having main fluid feed and exhaust ducts (48, 50);
· a reaction member (4) secured to the case;
· a cylinder block (6) mounted to rotate about an axis of rotation (10) relative to said reaction member (4) and including a plurality of cylinder-and-piston assemblies (12-14) disposed radially relative to the axis of rotation (10) and suitable for being fed with fluid under pressure;
· an internal fluid distributor (16) secured to the case (2A, 2B, 2C, 2D) relative to rotation about the axis of rotation and including distribution ducts suitable for putting the cylinders into communication with the main fluid feed and exhaust ducts (48, 50); and
· an internal shaft (26) extending inside the case (2A, 2B, 2C, 2D) coaxially with the axis of rotation (10) and secured to the cylinder block (6) relative to rotation about the axis of rotation (10),
the motor being **characterised in that** it includes a braking device according to any one of claims 1 to 11, the brake case (2D) being constituted by a portion of the case (2A, 2B, 2C, 2D) of the motor (1), and the internal member being constituted by the internal shaft (26).

## Patentansprüche

1. Bremsvorrichtung, umfassend:
ein Bremsgehäuse (2D), in dessen Inneren ein inneres Element (26A) angeordnet ist, wobei sich das Gehäuse und das innere Element zueinander um eine Drehachse (10) drehen können,
erste Bremsmittel (54), die drehfest mit dem Bremsgehäuse verbunden sind,
zweite Bremsmittel (32), die drehfest mit dem inneren Element verbunden sind,
einen Bremskolben (62), der eine erste zum Inneren des Gehäuses (2D) gerichtete Seite (64) und eine Stützzone (66) aufweist, die sich im Wesentlichen quer zur Drehachse erstreckt,
elastische Mittel (68), um den Bremskolben (62) axial in eine erste Richtung (F1) in eine Bremsposition zu verschieben, in der die Stützzone (66) die ersten und zweiten Bremsmittel (32, 54) axial in Bremskontakt bringt,
hydraulische Mittel (74, 76), um den Bremskolben (62) axial in eine zweite Richtung (F2) in eine Bremslöseposition zu verschieben, in der der Bremskontakt nicht gegeben ist, und
mechanische Bremslösemittel, um den Bremskolben (62) in die Bremslöseposition zu bringen und in dieser zu halten, wobei die Mittel eine Schraube (98) umfassen, die mit einem Gewinde (102) zusammenwirkt,
wobei die ersten und zweiten Bremsmittel (32, 54) sowie die Stützzone (66) des Bremskolbens (62) generell eine Drehsymmetrie zur Drehachse (10) aufweisen,
**dadurch gekennzeichnet, daß** die mechanischen Bremslösemittel mindestens zwei Bremslösesysteme (90, 92; 190, 192; 290, 292; 390, 392) aufweisen, jeweils umfassend:
- eine Bohrung (94, 194, 294, 394, 494, 594), die in dem Gehäuse (2D) vorgesehen ist und ein erstes offenes Ende, das in einer im wesentlichen axialen Außenfläche (96) des Gehäuses (2D) angeordnet ist, und ein zweites offenes Ende aufweist, das gegenüber der ersten Seite (64) des Bremskolbens (62) angeordnet ist, wobei sich die Bohrung von ihrem ersten Ende aus zumindest auf einem ersten Abschnitt (100, 194, 300, 394, 494, 594) in wesentlichen radial zur Drehachse erstreckt, der in einem dem ersten Ende der Bohrung benachbarten Bereich (102, 494A, 594A) mit Gewinde versehen ist, wobei letztgenannte Bohrung eine Bodenwandung (110; 210; 302B; 310) aufweist, die sich in der Nähe ihres zweiten Endes befindet und zumindest teilweise die Bohrung auf der Seite der Drehachse (10) verschließt,
- eine Schraube (98), die in dem Gewindebereich (102, 494A, 594A) angeordnet ist und durch Eindrehen in dem ersten Abschnitt im wesentlichen radial zur Drehachse verschoben werden kann, und
- Mittel zur Übertragung der Verschiebung, die beim Eindrehen der Schraube (98) den Kolben (62) in seine zweite Position bringen können, wobei diese Übertragungsmittel mindestens ein Zwischenelement (120, 220, 320, 420, 520) umfassen, das unter der Wirkung des Eindrehens der Schraube auf der Bodenwandung (110, 210, 310) der Bohrung (94, 194, 294, 394, 494, 594) rollen kann, um sich im wesentlichen axial (F2) zu der ersten Seite (64) des Bremskolbens (62) zu verschieben.

2. Vorrichtung nach Anspruch 1, **dadurch gekennzeichnet, daß** für jedes Bremslösesystem (90, 92; 190, 192; 290, 292; 390, 392) die Bodenwandung der Bohrung (94, 194; 294; 394; 494; 594) eine erste Rampe (110; 210; 310) bildet, die zu der, Drehachse (10) in die Richtung (F2) geneigt ist, welche zur ersten Seite (64) des Kolbens (62) hingeht, und daß die übertragungsmittel eine Übertragungskugel (120; 220; 320; 420; 520) umfassen, die auf dieser Rampe (110; 210; 310) angeordnet ist und auf letztgenannter unter der Wirkung des Eindrehens der Schraube (98) rollen kann.

3. Vorrichtung nach Anspruch 2, **dadurch gekennzeichnet, daß** sich für jedes Bremslösesystem (190, 192) die Bohrung (194) entlang eines einzigen im wesentlichen radialen Abschnittes erstreckt und die erste Seite (64) des Kolbens (62) eine zweite Rampe (112, 114) aufweist, die sich im wesentlichen gegenüber der ersten Rampe (110) befindet und in die entgegengesetzte Richtung geneigt ist, wobei die Übertragungskugel (120) zwischen der ersten und zweiten Rampe (110; 112, 114) und dem Ende der Schraube (98) gehalten wird.

4. Vorrichtung nach Anspruch 3, **dadurch gekennzeichnet, daß** die zweite Rampe auf einer angefasten Kance (112) verwirklicht ist, die in dem Bereich des äußeren Randes der ersten Seite (64) des Kolbens (62) vorgesehen ist.

5. Vorrichtung nach Anspruch 3, **dadurch gekennzeichnet, daß** die zweite Rampe auf einer Kerbe (114) verwirklicht ist, die in der ersten Seite (64) des Kolbens (62) angeordnet ist.

6. Vorrichtung nach Anspruch 2, **dadurch gekennzeichnet, daß** sich für jedes Bremslösesystem die Bohrung (394) entlang eines einzigen im wesentlichen radialen Abschnittes erstreckt und die erste Seite (64) des Kolbens (62) einen Rücksprung (402) aufweist, die teilweise zwei Aufnahmekugeln (321, 322) lagern kann, so daß letztgenannte gegenüber der ersten Seite (64) vorspringen und mit der Übertragungskugel (320) zusammenwirken.

7. Vorrichtung nach Anspruch 2, **dadurch gekennzeichnet, daß** für jedes Bremslösesystem (290, 292) die Bohrung (294) einen ersten im wesentlichen radialen Abschnitt (300) und einen zweiten im wesentlichen axialen Abschnitt (302) umfasst, der am zweiten Ende (302A) der Bohrung (294) offen ist, wobei die erste Rampe (210) in der Anschlusszone zwischen dem ersten und dem zweiten Abschnitt (300, 302) vorgesehen ist, wobei mindestens eine Aufnahmekugel (221, 222) in dem zweiten Abschnitt (302) angeordnet ist, wobei die Übertragungskugel (220) beim Eindrehen der Schraube (98) mit der Aufnahmekugel (221, 222) zusammenwirken kann, um letztgenannte dazu zu bringen, über das zweite Ende (302A) der Bohrung (294) hinauszutreten.

8. Vorrichtung nach einem der Ansprüche 1 bis 7, **dadurch gekennzeichnet, daß** sie für jedes Bremslösesystem Mittel (230) umfasst, um den Austritt des oder der Zwischenelemente (120, 220, 320) aus der Bohrung (94, 194, 294, 394) zu verhindern, wenn die Schraube (98) aus der Bohrung herausgenommen wird.

9. Vorrichtung nach einem der Ansprüche 1 bis 8, **dadurch gekennzeichnet, daß** sie zwei Bremslösesysteme umfasst, die an zwei symmetrischen Positionen zur Drehachse angeordnet sind.

10. Vorrichtung nach einem der Ansprüche 1 bis 9, **dadurch gekennzeichnet, daß** sie für jedes Bremslösesystem Mittel (495, 595) umfasst, um eine permanente Dichtheit in der Bohrung (494, 594) sicherzustellen.

11. Vorrichtung nach Anspruch 10, **dadurch gekennzeichnet, daß** sie für jedes Bremslösesystem einen Dichtungsstopfen (495; 595) umfasst, der in dem ersten Abschnitt der Bohrung (494, 594) zwischen dem Ende der Schraube (98) und dem mindestens einen Zwischenelement (420, 520) angeordnet ist.

12. Hydraulikmotor, umfassend:
- ein Gehäuse (2A, 2B, 2C, 2D), umfassend Hauptleitungen zur Zuleitung und Ableitung eines Fluids (48, 50);
- ein fest mit dem Gehäuse verbundenes Reaktionselement (4);
- einen Zylinderblock (6), der relativ drehbar um eine Drehachse (10) in Bezug auf das Reaktionselement (4) angeordnet ist und eine Vielzahl von Zylinder- (12) und Kolbeneinheiten (14) umfasst, die radial in Bezug auf die Drehachse (10) angeordnet sind und mit Druckfluid versorgt werden können;
- einen inneren Fluidverteiler (16), der drehfest mit dem Gehäuse (2A, 2B, 2C, 2D) in Bezug auf die Drehachse verbunden ist und Verteilungsleitungen umfasst, die die Zylinder mit den Hauptleitungen zur Zuleitung und Ableitung eines Fluids (48, 50) in Verbindung bringen können; und
- eine innere Welle (26), die sich im Inneren des Gehäuses (2A, 2B, 2C, 2D) koaxial zur Drehachse (10) erstreckt und mit dem Zylinderblock (6) in Bezug auf die Drehachse (10) drehfest verbunden ist,
**dadurch gekennzeichnet, daß** er eine Bremsvorrichtung nach einem der Ansprüche 1 bis 11 umfasst, wobei das Bremsgehäuse (2D) von einem Teil des Gehäuses (2A, 2B, 2C, 2D) des Motors (1) gebildet ist und das innere Element von der inneren Welle (26) gebildet ist.
